# EUROPEAN PATENT SPECIFICATION

(11) **EP 3 515 788 B1**
(45) Date of publication and mention of the grant of the patent: **15.07.2020**
(21) Application number: 17784012.1
(22) Date of filing: 19.09.2017
(51) Int. Cl.: B62D 1/18, B62D 5/00, B62D 1/14, B62D 1/183

(54) **BY-WIRE STEERING WHEEL ASSEMBLY**
BY-WIRE LENKRADANORDNUNG
ASSEMBLAGE VOLANT DE DIRECTION ÉLECTRIQUE

(30) Priority: 19.09.2016 IT 201600093789
(43) Date of publication of application: 31.07.2019
(73) Proprietor: Iveco S.p.A., 10156 Torino (IT)
(72) Inventor: ARMIGLIATO, Marco, 10153 Torino (IT); VERGANO, Raffaele, 10020 Cambiano (IT); CALAON, Ivan, 10125 Torino (IT)
(74) Representative: Faraldi, Marco
(86) International application number: PCT/IB2017/055669
(87) International publication number: WO 2018/051316

(56) References cited:
- WO-A1-91/06461
- WO-A1-2010/050882
- DE-A1- 10 347 925
- FR-A1- 2 861 657
- US-A- 6 068 295

## Description

### TECHNICAL FIELD

The invention relates to a steering wheel assembly for a vehicle, in particular to a by-wire steering wheel assembly for an industrial vehicle.

Driver's cabins of industrial vehicles have the need of ensuring utmost comfort and, at the same time, large spaces to increase their liveability as well as guaranteeing proper ergonomics during the hours spent behind the wheel.

### BACKGROUND ART

According to the state of the art, the use of by-wire steering wheel assemblies for terrestrial vehicles is known, as can be seen by documents DE10347925 A1, WO2010050882 A1, US6068295 A, WO1991/06461 A1 or FR2861657 A1. DE 103 47 925 A1 discloses a by-wire steering assembly according to the preamble of claim 1.

By-wire systems allow manufacturers to eliminate the need for a continuous mechanical or oil-dynamic chain between the steering wheel assembly and the wheels of the vehicles, so as to permit the change of direction and, hence, a reduction of the dimensions of the steering wheel assembly.

However, there is still the need to have steering wheel assemblies, which ensure small dimensions and good ergonomics.

### DISCLOSURE OF INVENTION

The aforesaid object is reached by means of a by-wire
steering wheel assembly according to the appended set of claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 is a perspective view of a by-wire steering wheel assembly according to the invention;
- figures 2A-2D are perspective views showing the degrees of freedom of the steering wheel assembly of figure 1; and
- figures 3A-3C are schematic views showing the possible configurations of the steering wheel assembly of figure 1.

### BEST MODE FOR CARRYING OUT THE INVENTION

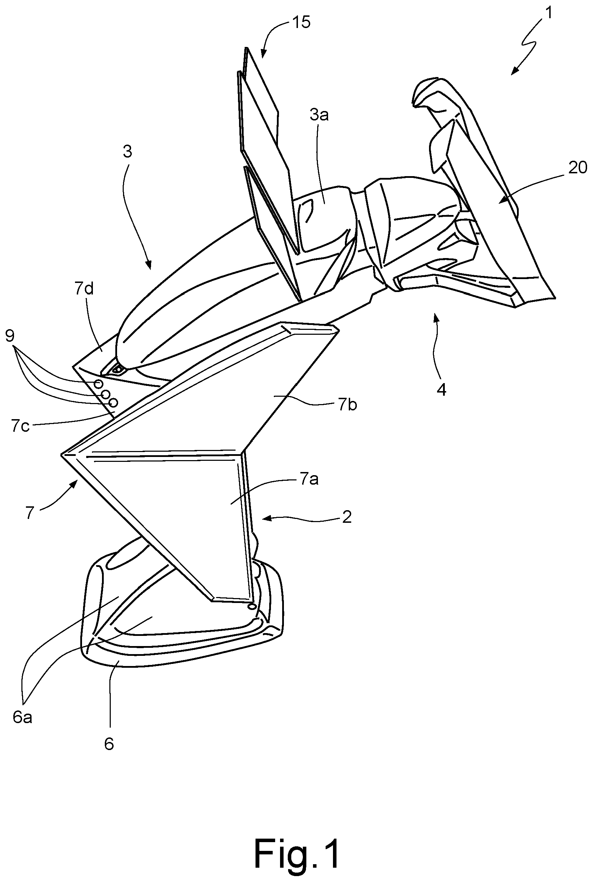

Figure 1 shows a by-wire steering wheel assembly 1, which is housed inside a cabin of an industrial vehicle (not shown) and basically comprises a column 2, a body 3 carried by the column, and a hub 4 carried by the body 3, wherein the hub 4 is placed in front of the user.

The column 2 comprises a base 6, which is fixed to the floor of the cabin of the vehicle, and a pair of lateral uprights 7 axially extending from the base 6. Preferably, the lateral uprights 7 are fixed to respective projections 6a axially extending from the base 6 in the area of the uprights 7. Hence, the drive can place his/her legs in the space between the uprights 7.

More preferably, the uprights 7 have a substantially prismatic shape with a rhomboidal cross-section and comprise a lower portion 7a, which is inclined with respect to a horizontal plane so as to be father from the user, and an upper portion 7b, which is substantially inclined at the same angle as the lower portion relative to a horizontal plane, but so as to be closer to the user. The two upper and lower portions 7b, 7a substantially have the same dimensions and, hence, define a stylized C-shape or boomerang-shape with the concavity facing the user.

On lateral inner surfaces 7c of the uprights 7, preferably of the lower portions 7a, there are obtained a plurality of openings 9 arranged in succession so as to substantially define a linear succession of openings running along the entire length of the lower portion 7a. These openings 9 are air intakes, from which at least part of the air of the air conditioning system of the cabin flows out.

Obviously, the openings 9 can have a different shape, be present in a different number or be of different kinds, for example through a limited number of greater-sized mouths or a slit for a laminar air jet.

On lateral inner surfaces 7d of the upper portions 7b there is respectively provided a guide 11 with a substantially rectangular shape, which runs along the upper portions 7b from an upper limit position to a lower limit position. The guides 11 are configured to cooperate with a protuberance 12 carried by the body 3, as described below.

The body 3 substantially has the shape of a parallelepiped defined by a pair of respectively concave and convex upper 3a and lower 3b surfaces and by a pair of lateral surfaces 3c having a concavity that faces the inside of the body 3.

On each one of the lateral surfaces 3c there is provided, coaxial, at least protuberance 12, which is configured to cooperate with the guides 11 described above so as to allow the body 3 to slide relative to the uprights 7.

Therefore, the body 3 can freely slide between an upper stroke end position, in which the protuberance 12 is in contact with the upper limit position of the guides 11, and lower stroke end position, in which the protuberance 12 is in contact with the lower limit position of the guides 11.

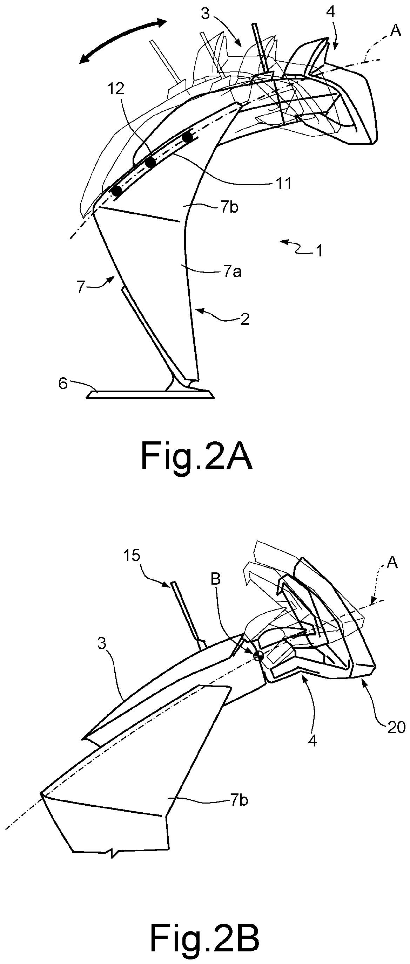

The sliding coupling between the projections 12 and the guides 11 (see figure 2A) is configured to allow the body 3 to be positioned relative to the uprights 7 in three predetermined positions:
- A first position by the upper stroke end;
- A second position by the lower stroke end; and
- A third position in an intermediate position, corresponding to half the useful stroke of the body 3 between the uprights 7.

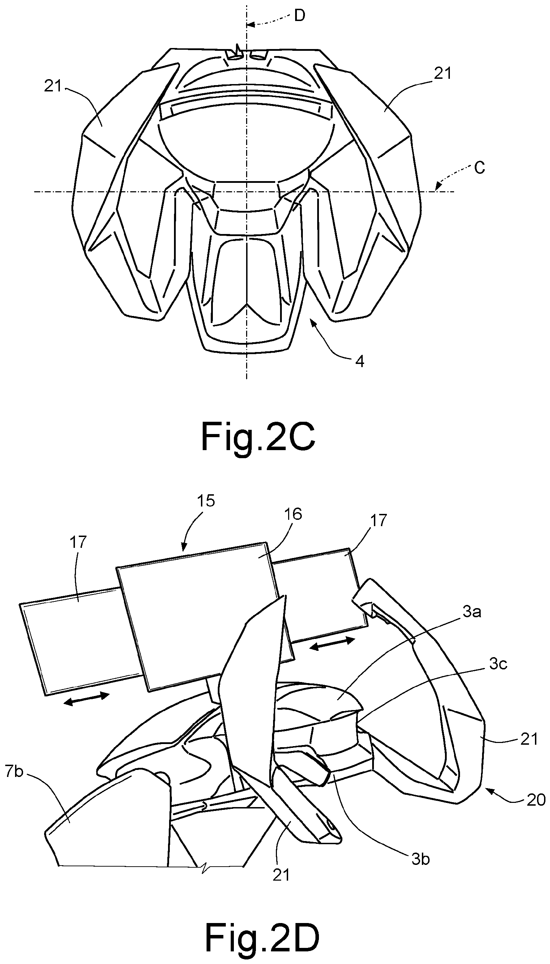

On the upper surface 3a (figure 2D) there is fixed a control panel 15 comprising a main screen 16, preferably with a substantially rectangular shape, and a pair of auxiliary screens 17, which are carried by said main screen in a movable manner.

In particular, the auxiliary screen 17 can slide behind the main screen 16 so as to be housed there when there is no need to use the entire width of the control panel 15. For example, the auxiliary screens slide thanks to a prismatic coupling to the main screen 16.

The projecting terminal portion of the body 3 carries a hub 4. The hub 4 substantially has the shape of a truncated cone and comprises gripping means 20, which are connected to the hub 4 and face the user of the steering wheel assembly 1.

The hub 4 (figure 2B) is carried by the body 3 so that it can freely rotate around a longitudinal axis A of the body 3 in order to control the steering in a known manner according to the by-wire technology.

The hub 4 can also rotate, within a predetermined limit, around a transverse axis B, which is perpendicular to the longitudinal axis A of the body 3, between a lower position, in which the longitudinal axis of the hub 4 is substantially horizontal, and a position, in which the longitudinal axis of the hub 4 is substantially coaxial to the axis A of the body 3.

The gripping means 20 (figure 2C) are connected to the hub 4 so that they can rotate around a horizontal axis C, which is horizontal relative to the hub 4, and around a vertical axis D so as to move from a lower open position, facing the driver, to an upper closed position, in which they face the control panel 15. Through the gripping means 20 the user can rotate the hub 4 around its longitudinal axis, so as to permit the steering.

Preferably, the gripping means 20 are a pair of substantially "C"-shaped handlebars 21, whose lower end is fixed to the hub 4 and whose upper end faces the control panel 15.

To sum up, the steering wheel assembly 1 described herein has a plurality of degrees of freedom, which permit a reconfiguration thereof in the space of the cabin of the vehicle, precisely:
- The sliding of body 3 on the uprights 7 along the longitudinal axis A of the body 3;
- The rotation of the hub 4 around the longitudinal axis A of the body 3;
- The rotation of the hub 4 around a transverse axis B that is transverse to the axis A of the body 3;
- The rotation of the gripping means 20 around a vertical axis D and a horizontal axis C that is horizontal with respect to the hub 4; and
- The sliding of the lateral screens 17 of the control panel 15 behind the main screen 16.

Said sliding and rotation movements can be carried out manually or they can be carried out by means of electric actuators controlled by suitable remote controls or buttons, as it is known.

Preferably, the steering wheel assembly 1 comprises a plurality of pre-configured positions to maximize the comfort during some typical use situations that can occur in the driver's cabin of an industrial vehicle.

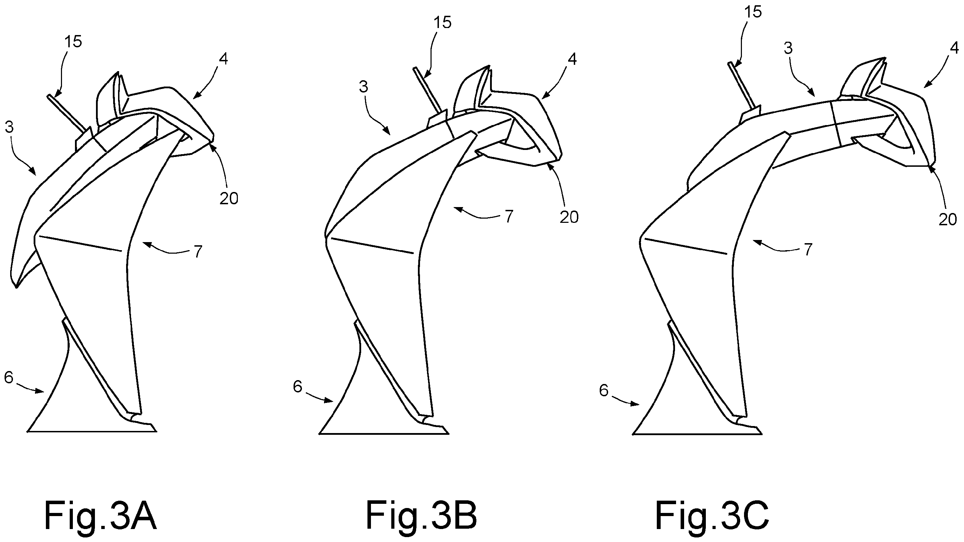

A first configuration of the steering wheel assembly 1, which is shown in figure 3A, is a configuration in which the assembly occupies a minimum space inside the cabin and it can be used during resting times to maximize the useful space of the cabin. In this configuration, the body 3 reaches the lower stroke end, the hub 4 is in an upper position in which it is aligned with the body 3 and the gripping means 20 are arranged in their closed position towards the control panel 15.

A second configuration of the steering wheel assembly 1, which is shown in figure 3B, is suited to improve ergonomics while driving in town, in particular as it is raised and allows the driver to see immediately in front of the vehicle. In this configuration, the body 3 is in its intermediate position, the hub 4 is in an upper position in which it is aligned with the body 3 and the gripping means 20 are open towards the driver.

A third configuration of the steering wheel assembly 1, which is shown in figure 3C, is suited to improve ergonomics while driving on a motorway, in particular as it is more inclined and allows the driver to better see from a distance. In this configuration, the body 3 is in its upper limit position, the hub 4 is in a lower position in which the longitudinal axis is substantially horizontal and the gripping means 20 are open towards the driver.

The operation of the steering wheel assembly 1 is the following:
Based on the required configuration, the steering wheel assembly 1 is configured in the following manners.

For example, in a transition between the first configuration and the second configuration, the body 3 slides from the lower limit position towards the intermediate position and the gripping means 20, which are closed on the hub 4, open up on the horizontal axis and on the vertical axis.

For example, in a transition between the second configuration and the third configuration, the body 3 slides from the intermediate position to the upper limit position and the hub 4 tilts towards the driver.

Again, in a transition between the first configuration and the third configuration, the body 3 slides from the lower limit position towards the upper limit position, the gripping means 20, which are closed on the hub 4, open up on the horizontal axis and on the vertical axis and the hub 4 tilts towards the driver.

The reverse operations can easily be assumed, as they imply a simple repetition of the operations described above in reverse order; therefore, for the sake of brevity, they will not be described in detail.

Owing to the above, the advantages of a by-wire steering wheel assembly according to the invention are evident.

The by-wire steering wheel assembly 1 described herein can easily reconfigure its dimensions inside the cabin in a quick, simple and economic fashion.

The different positions can be pre-configured so as to maximize the liveability of the vehicle or the driver's comfort in the different driving conditions.

Finally, the steering wheel assembly described above can be subjected to changes, which - however - do not go beyond the scope of protection set forth in the appended claims.

For example, the shape and the number of the elements comprised in the steering wheel assembly 1 could be different. Furthermore, the pre-configured configurations mentioned herein could be multiple, hence the invention is not limited to the three configurations described above.

Finally, the control panel 15 could be manufactured differently, as well as the air intakes 9 on the uprights 7 or the shape of the gripping means 20 of the hub 4.

## Claims

1. A by-wire steering assembly (1) comprising:
- a column (2) comprising a base (6) which can be fixed inside a cabin of a vehicle and a pair of uprights (7) extending from said base (6),
- a body (3) carried by said uprights (7) and mobile with respect to them, and
- a hub (4) carried by said body (3) and mobile with respect to itself, said hub (4) being provided with gripping means (20),
**characterized in that** said steering assembly (1) is reconfigurable to modify the space occupied by it inside said cabin by means of the relative movement of said body (3), of said hub (4) and of said gripping means (20) reciprocally and with respect to said column (2),
wherein said body (3) is slidingly mobile relative to said column (2), said hub (4) is rotationally supported free around a longitudinal axis (A) of said body (3) and can tilt, within a given angular interval, with respect to an axis (B) perpendicular to the axis (A) of said body (3) and wherein said gripping means (20) can rotate around respective horizontal and vertical axes (C, D) with respect to said hub (4) to position themselves respectively in a closed position on said hub (4) and an open position with respect to said hub (4).

2. A steering assembly according to claim 1, wherein said sliding is accomplished by means of a prismatic coupling between said body (3) and said uprights (7).

3. A steering assembly according to claim 1, wherein said sliding occurs between an upper stroke end and a lower stroke end, it said sliding being possible to lock in any intermediate position between said stroke ends.

4. A steering assembly according to any of the preceding claims, wherein said gripping means (20) comprise two C-shaped arched elements (21) connected to said hub (4) by a lower end thereof.

5. A steering assembly according to any one of the preceding claims, further comprising a control panel (15) carried by said body (3).

6. A steering assembly according to claim 5, wherein control panel (15) is fixed to said body (3), said control panel (15) comprising a central screen (16) and respective lateral screens (17), said lateral screens (17) being configured to slide from an internal terminal position in which they are housed to the rear of said central screen (16) to an external terminal position in order to increase the working surface of said control panel (15).

7. A steering assembly according to any one of the preceding claims, wherein said uprights (7) comprise a plurality of air intakes (9).

8. A steering assembly according to any one of the preceding claims wherein steering assembly (1) can be reconfigured manually or by means of electric actuators.

9. A steering assembly according to any of the preceding claims, wherein steering assembly (1) can be reconfigured in one of many predefined configurations.

10. A steering assembly according to claim 9, wherein one of said predefined configurations is a configuration with minimum overall dimensions in which:
- said body (3) is positioned in said lower stroke end;
- said hub (4) is not rotated with respect to said transverse axis (B);
- said gripping means (20) are positioned in said upper stroke end.

11. A steering assembly according to claim 9, wherein one of said predefined configurations is a "motorway" driving configuration in which:
- said body (3) is positioned in an intermediate position;
- said hub (4) is not rotated with respect to said transverse axis (B);
- said gripping means (20) are positioned in said lower stroke end.

12. A steering assembly according to claim 9, wherein one of said predefined configurations is a "town" driving configuration in which:
- said body (3) is positioned in said upper stroke end;
- said hub (4) is rotated with respect to said transverse axis (B);
- said gripping means (20) are positioned in said lower stroke end.

## Patentansprüche

1. Eine By-wire Lenkanordnung (1), umfassend:
- eine Säule (2), umfassend eine Basis (6), die in einer Fahrzeugkabine befestigt werden kann und ein Paar Ständer (7), die sich von der Basis (6) aus erstrecken,
- einen Körper (3), der von den Ständern (7) getragen wird und in Bezug auf diese beweglich ist, und
- eine Nabe (4), die von dem Körper (3) getragen wird und in Bezug auf sich beweglich ist, wobei die Nabe (4) mit Greifmitteln (20) ausgeführt ist,
**dadurch gekennzeichnet, dass** die Lenkanordnung (1) rekonfigurierbar ist, um den von ihr eingenommenen Raum innerhalb der Kabine durch die Mittel der relativen Bewegung des Körpers (3), der Nabe (4) und der Greifmittel (20) reziprok und in Bezug auf die Säule (2) anzupassen,
wobei der Körper (3) relativ zur Säule (2) gleitend beweglich ist, wobei die Nabe (4) frei drehbar um eine Längsachse (A) des Körpers (3) gelagert ist und innerhalb eines gegebenen Winkelintervalls in Bezug auf eine zur Achse (A) des Körpers (3) senkrechte Achse (B) neigbar ist und wobei die Greifmittel (20) um jeweils in Bezug auf die Nabe (4) horizontale und vertikale Achsen (C,D) rotieren können, um sich jeweils in einer geschlossenen Position auf der Nabe (4) und in einer offenen Position in Bezug auf die Nabe (4) zu positionieren.

2. Lenkanordnung nach Anspruch 1, wobei das Gleiten durch Mittel einer prismatischen Kopplung zwischen dem Körper (3) und den Ständern (7) erreicht wird.

3. Lenkanordnung nach Anspruch 1, wobei das Gleiten zwischen einem oberen und einem unteren Anschlagende erfolgt, wobei das Gleiten in einer beliebigen Zwischenposition zwischen den Anschlagenden verriegelbar ist.

4. Lenkanordnung nach einem der vorstehenden Ansprüche, wobei die Greifmittel (20) zwei C-förmige gebogene Elemente (21) umfassen, die mit der Nabe (4) an einem unteren Ende dieser verbunden sind.

5. Lenkanordnung nach einem der vorstehenden Ansprüche, weiter umfassend ein Steuerpanel (15), das von dem Körper (3) getragen wird.

6. Lenkanordnung nach Anspruch 5, wobei das Steuerpanel (15) an dem Körper (3) befestigt ist, wobei das Steuerpanel (15) einen zentralen Bildschirm (16) und jeweilige seitliche Bildschirme (17) umfasst, wobei die seitlichen Bildschirme (17) ausgeführt sind, um von einer internen Endposition, bei der sie auf der Rückseite des zentralen Bildschirms (16) untergebracht sind, in eine externe Endposition zu gleiten, um die Arbeitsfläche des Steuerpanels (15) zu erhöhen.

7. Lenkanordnung nach einem der vorstehenden Ansprüche, wobei die Ständer (7) eine Mehrzahl an Lufteinlässen (9) umfassen.

8. Lenkanordnung nach einem der vorstehenden Ansprüche, wobei die Lenkanordnung (1) manuell oder durch Mittel elektrischer Antriebe rekonfiguriert werden kann.

9. Lenkanordnung nach einem der vorstehenden Ansprüche, wobei die Lenkanordnung (1) in eine von vielen vorgegebenen Konfigurationen rekonfiguriert werden kann.

10. Lenkanordnung nach Anspruch 9, wobei eine der vorgegebenen Konfigurationen eine Konfiguration mit minimalen Außenmaßen ist, in welcher:
- der Körper (3) am unteren Anschlagsende positioniert ist;
- die Nabe (4) in Bezug auf die Querachse (B) nicht gedreht ist;
- die Greifmittel (20) am oberen Anschlagsende positioniert sind.

11. Lenkanordnung nach Anspruch 9, wobei eine der vorgegebenen Konfigurationen eine "Autobahn"-Fahrkonfiguration ist, in welcher:
- der Körper (3) in einer Zwischenposition positioniert ist;
- die Nabe (4) in Bezug auf die Querachse (B) nicht c ist;
- die Greifmittel (20) am unteren Anschlagsende positioniert sind.

12. Lenkanordnung nach Anspruch 9, wobei eine der vorgegebenen Konfigurationen eine "Stadt"-Fahrkonfiguration ist, in welcher:
- der Körper (3) am oberen Anschlagsende positioniert ist;
- die Nabe (4) in Bezug auf die Querachse (B) gedreht ist;
- die Greifmittel (20) am unteren Anschlagsende positioniert sind.

## Revendications

1. Ensemble de direction à commande électrique (1) comprenant :
- une colonne (2) comprenant une base (6) qui peut être fixée à l'intérieur d'une cabine d'un véhicule et une paire de montants (7) s'étendant à partir de ladite base (6),
- un corps (3) porté par lesdits montants (7) et mobile par rapport à eux, et
- un moyeu (4) porté par ledit corps (3) et mobile par rapport à lui-même, ledit moyeu (4) étant pourvu de moyens de préhension (20),
**caractérisé en ce que** ledit ensemble de direction (1) est reconfigurable pour modifier l'espace occupé par lui à l'intérieur de ladite cabine au moyen du mouvement relatif dudit corps (3), dudit moyeu (4) et desdits moyens de préhension (20) réciproquement et par rapport à ladite colonne (2),
dans lequel ledit corps (3) est mobile de manière coulissante par rapport à ladite colonne (2), ledit moyeu (4) est supporté de manière rotative libre autour d'un axe longitudinal (A) dudit corps (3) et peut s'incliner, à l'intérieur d'un intervalle angulaire donné, par rapport à un axe (B) perpendiculaire à l'axe (A) dudit corps (3) et dans lequel lesdits moyens de préhension (20) peuvent tourner autour d'axes horizontal et vertical (C, D) respectifs par rapport audit moyeu (4) pour se positionner eux-mêmes respectivement dans une position fermée sur ledit moyeu (4) et une position ouverte par rapport audit moyeu (4).

2. Ensemble de direction selon la revendication 1, dans lequel ledit coulissement est accompli au moyen d'un accouplement prismatique entre ledit corps (3) et lesdits montants (7).

3. Ensemble de direction selon la revendication 1, dans lequel ledit coulissement se produit entre une fin de course supérieure et une fin de course inférieure, ledit coulissement pouvant être bloqué dans une quelconque position intermédiaire entre lesdites fins de course.

4. Ensemble de direction selon l'une quelconque des revendications précédentes, dans lequel lesdits moyens de préhension (20) comprennent deux éléments arqués en forme de C (21) reliés audit moyeu (4) par une extrémité inférieure de ceux-ci.

5. Ensemble de direction selon l'une quelconque des revendications précédentes, comprenant en outre un panneau de commande (15) porté par ledit corps (3).

6. Ensemble de direction selon la revendication 5, dans lequel un panneau de commande (15) est fixé audit corps (3), ledit panneau de commande (15) comprenant un écran central (16) et des écrans latéraux (17) respectifs, lesdits écrans latéraux (17) étant configurés pour coulisser à partir d'une position terminale interne dans laquelle ils sont logés à l'arrière dudit écran central (16) jusqu'à une position terminale externe afin d'augmenter la surface de travail dudit panneau de commande (15).

7. Ensemble de direction selon l'une quelconque des revendications précédentes, dans lequel lesdits montants (7) comprennent une pluralité d'entrées d'air (9).

8. Ensemble de direction selon l'une quelconque des revendications précédentes dans lequel un ensemble de direction (1) peut être reconfiguré manuellement ou au moyen d'actionneurs électriques.

9. Ensemble de direction selon l'une quelconque des revendications précédentes, dans lequel un ensemble de direction (1) peut être reconfiguré dans une parmi de nombreuses configurations prédéfinies.

10. Ensemble de direction selon la revendication 9, dans lequel une desdites configurations prédéfinies est une configuration avec des dimensions globales minimales dans laquelle :
- ledit corps (3) est positionné dans ladite fin de course inférieure ;
- ledit moyeu (4) ne tourne pas par rapport audit axe transversal (B) ;
- lesdits moyens de préhension (20) sont positionnés dans ladite fin de course supérieure.

11. Ensemble de direction selon la revendication 9, dans lequel une desdites configurations prédéfinies est une configuration de conduite « sur autoroute » dans laquelle :
- ledit corps (3) est positionné dans une position intermédiaire ;
- ledit moyeu (4) ne tourne pas par rapport audit axe transversal (B) ;
- lesdits moyens de préhension (20) sont positionnés dans ladite fin de course inférieure.

12. Ensemble de direction selon la revendication 9, dans lequel une desdites configurations prédéfinies est une configuration de conduite « en ville » dans laquelle :
- ledit corps (3) est positionné dans ladite fin de course supérieure ;
- ledit moyeu (4) tourne par rapport audit axe transversal (B) ;
- lesdits moyens de préhension (20) sont positionnés dans ladite fin de course inférieure.
